(19) Europäisches Patentamt
European Patent Office
Office européen des brevets

(11) **EP 2 079 612 B1**

(12) **EUROPÄISCHE PATENTSCHRIFT**

(45) Veröffentlichungstag und Bekanntmachung des Hinweises auf die Patenterteilung:
**01.06.2011 Patentblatt 2011/22**

(51) Int Cl.:
***B60R 21/013*** *(2006.01)*    ***B60R 21/0136*** *(2006.01)*

(21) Anmeldenummer: **07803290.1**

(86) Internationale Anmeldenummer:
**PCT/EP2007/059335**

(22) Anmeldetag: **06.09.2007**

(87) Internationale Veröffentlichungsnummer:
**WO 2008/043616 (17.04.2008 Gazette 2008/16)**

(54) **UNFALLSENSOR UND VERFAHREN ZUR VERARBEITUNG VON WENIGSTENS EINEM MESSSIGNAL**

CRASH SENSOR AND METHOD FOR PROCESSING AT LEAST ONE MEASURED SIGNAL

DÉTECTEUR D'ACCIDENT ET PROCÉDÉ POUR TRAITER AU MOINS UN SIGNAL DE MESURE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **09.10.2006 DE 102006047632**

(43) Veröffentlichungstag der Anmeldung:
**22.07.2009 Patentblatt 2009/30**

(73) Patentinhaber: **Robert Bosch GmbH**
**70442 Stuttgart (DE)**

(72) Erfinder: **SCHRUELLKAMP, Michael**
**74321 Bietigheim-Bissingen (DE)**

(56) Entgegenhaltungen:
**DE-A1- 3 133 304      DE-A1- 10 148 029**
**DE-A1- 10 237 162**

EP 2 079 612 B1

**Beschreibung**

Stand der Technik

Die Erfindung betrifft einen Unfallsensor bzw. ein Verfahren zur Verarbeitung von wenigstens einem Messsignal nach der Gattung der unabhängigen Patentansprüche.

Aus DE 102 37 162 A1 ist es bekannt, dass ein Sensorelement einen Messwert liefert, der verstärkt und digitalisiert wird. Dieser Messwert wird einer Vorverarbeitung unterzogen.

Offenbarung der Erfindung

Der erfindungsgemäße Unfallsensor bzw. das erfindungsgemäße Verfahren zur Verarbeitung von wenigstens einem Messsignal mit den Merkmalen der unabhängigen Patentansprüche haben demgegenüber den Vorteil, dass ein wiederbeschreibbarer Speicher, vorzugsweise ein EEPROM, getestet wird und in Abhängigkeit von diesem Speichertest entschieden wird, aus welchem Speicher die Daten geladen werden, um die Verarbeitung des wenigstens einen Messwerts zu beeinflussen. Damit kann bei einem Ausfall des wiederbeschreibbaren Speichers auf hart verdrahtete Daten zurückgegriffen werden, die zwar dazu führen, dass nicht eine so hohe Genauigkeit der Messwerte erzielt wird, aber eine Grundfunktionalität des Unfallsensors wird bei solchen kritischen Sensoren immerhin noch gewährleistet. Damit wird die Funktionsfähigkeit, beispielsweise eines Personenschutzsystem, entscheidend erhöht.

Als wiederbeschreibbare Speicher kommen auch andere Speichertypen außer einem EEPROM in Frage, und zwar andere Halbleiterspeicher, die beispielsweise als Arbeitsspeicher in einem Computer dienen. Als fest verdrahteter Speicher ist beispielsweise ein ROM zu sehen.

Der Logikbaustein, der das ganze im Unfallsensor als Schaltwerk steuert, ist vorzugsweise als integrierter Schaltkreis, also als ein ASIC vorgesehen. Dieser Logikbaustein kann auch mehrere integrierte Bausteine, bzw. Schaltkreise bzw. lauter diskrete Bausteine aufweisen. Der Logikbaustein kann alternativ auch als ein Prozessor vorhanden sein.

Die ersten Daten aus dem wiederbeschreibbaren Speicher dienen als Abgleichsinformationen dazu, den Sensor durch diese Daten in seiner Empfindlichkeit genauer zu machen. Der Abgleich an sich wurde während der Herstellung des Unfallsensors durchgeführt. Auf die Daten aus diesem Abgleich wird aus dem wiederbeschreibbaren Speicher daher zurückgegriffen. Adaptionen aus dem Betrieb des Unfallsensors können ebenfalls genutzt werden.

Durch die in den abhängigen Ansprüchen aufgeführten Maßnahmen und Weiterbildungen sind vorteilhafte Verbesserungen des in den unabhängigen Patentansprüchen angegebenen Unfallsensors bzw. des in den unabhängigen Patentansprüchen angegebenen Verfahrens zur Verarbeitung wenigstens eines Messwerts möglich.

Besonders vorteilhaft ist, dass der Test mittels einer Prüfsumme durchgeführt wird. Vorliegend wird zur Prüfung unserer Abgleichsinformationen im EEPROM ein CRC-Prüfsummenverfahren (CRC = Cyclic Redundancy Check = zyklische Redundanzprüfung) genutzt.

Bei der Speicherung und Übertragung von binär dargestellten Daten können durch Störungen einzelne Bits verfälscht werden. Um derartige Fehler zu erkennen, werden an die Daten Prüfbits angehängt. Durch Anhängen von mehr als nur einem Prüfbit lässt sich die Fehlererkennungsrate drastisch steigern. Das CRC-Verfahren stellt eine Methode dar, um diese Prüfbits zu erzeugen. Die CRC-Prüfsumme (Cyclic Redundancy Check) basiert darauf, dass man Bitstring (also Folgen von 0 und 1) als Polynome mit den Koeffizienten 0 und 1 interpretiert. Bei k Bits hat man also k Terme, von $x^{(k-1)}$ bis $x^0$.

Beispiel:

$$110001 \quad \text{->} \quad x^5 + x^4 + x^0$$

Für die Berechnung einer CRC-Prüfsumme nun müssen Sender und Empfänger ein Generator-Polynom definieren (das muss bestimmte Eigenschaften haben, s. u.). Dieses Generatorpolynom habe m Bits. Die Idee der CRC-Prüfsumme ist nun, einem gegebenen Rahmen von Datenbits durch m Bits so zu ergänzen, dass das Polynom aus Datenbits und Prüfsumme durch das Generatorpolynom teilbar ist.

Vorliegend hat das EEPROM 32 bit. 24 bit werden für die Abgleichinformationen genutzt, die restlichen 8 bits sind sogenannte FCS bits (frame check sequence), die das Ergebnis der Polynomdivision der verwendeten Abgleichdaten (wird in der Fertigung des Sensors berechnet und ins EEPROM geschrieben) speichern.

Die Auswahl des Polynoms erfolgt so, dass eine maximale Hamming Distance (HD) erreicht wird. Die HD gibt die mindestens erforderliche Anzahl von Bit-Umkehrungen in den zu überwachenden Daten an, damit der Fehler nicht entdeckt wird.

Bei einem beispielhaften Sensor wird ein 8-bit Polynom ausgesucht, welches eine HD = 4 bietet, d.h. alle Kombinationen von 1-, 2-, 3-bit Fehlern können entdeckt werden.

Das implementierte Verfahren besteht aus 3 Schritten:

1. Laden der Daten: An die 24bit Abgleichdaten werden 8bits (=0) angehängt
2. Polynomdivision starten: In Hardware durch ein Schieberegister realisiert

3. Daten verglichen: Das Ergebnis der Polynomdivision aus 2. wird den FCS-bits des EEPROMS verglichen. Bei Gleichheit ist entsprechende Monitor-Bit "CRC-Check" in der SPI-Übertragung = 0, bei einer Abweichung ist das Monitor-Bit =1, welches vom System entsprechend ausgewertet werden kann.

Die komplette Sequenz 1-3 wird alle 17μs ausgeführt.

Vorteilhafter Weise werden die ersten oder die zweiten Daten dazu verwendet, eine Verstärkung für das wenigstens eine Messsignal und eine Referenzspannung zu beeinflussen, d. h. festzulegen bzw. festzusetzen. Es ist möglich auch weitere Parameter, beispielsweise die eines Filters in Abhängigkeit von den ersten oder zweiten Daten festzusetzen. Die Festlegung des Verstärkungsfaktors führt letztlich zu einer angestrebten Genauigkeit von beispielsweise 5 %, während der hart verdrahtete Wert für die Verstärkung lediglich zu einer Genauigkeit von 9% führen wird.

Es ist weiterhin vorteilhaft, dass in einer Initialphase eine schnelle Offsetregelung verwendet wird, um den Offset des Sensorelements an sich, einen sogenannten Rohoffset, zu beseitigen. In einer zyklischen Phase, also der eigentlichen Arbeitsphase des Sensors, wird eine langsame Offsetregelung verwendet, die für eine Beseitigung einer Drift, die bei Halbleiterelementen durchaus vorkommen kann, eingesetzt wird. Eine Offsetregelung ist ein einfacher Regelkreis, der in seiner Geschwindigkeit in bekannter Art und Weise beeinflussbar ist. Diese Regelung kann softwaremäßig und/oder hardwaremäßig ausgeführt sein. Die Initialphase ist die Anlaufphase des Sensors, während die zyklische Phase, wie oben angegeben, die Arbeitsphase des Sensors ist.

Vorteilhafter Weise überträgt der Sensor das Ergebnis des Tests über eine Schnittstelle. Damit kann beispielsweise ein Mikrocontroller in einem Airbagsteuergerät über den Zustand des Sensors informiert werden. Neben diesem Ergebnis überträgt der Unfallsensor natürlich auch seine Sensorwerte an den Mikrocontroller zur weiteren Verarbeitung.

Tritt ein Fehler während der zyklischen Phase auf, führt dies zu einer Veränderung des Pegels, die als Messsignal interpretiert werden kann. Um dies zu verhindern, kann ein solcher Fehler unterdrückt werden, indem die Messwerte dann nicht mehr vom Sensor weiter übertragen werden oder auch prozessorseitig nicht mehr akzeptiert werden. Auch ein Überschreiben dieser Messwerte im Sensor ist möglich, so dass nur noch die Fortwerte für eine vorgegebene Zeit übertragen werden.

Ausführungsbeispiele der Erfindung sind in der Zeichnung dargestellt und werden in der nachfolgenden Beschreibung näher erläutert.

Es zeigen:

Figur 1    ein Blockschaltbild mit dem erfindungsgemäßen Unfallsensor,

Figur 2    ein Signalablaufdiagramm,

Figur 3    ein Flussdiagramm,

Figur 4    ein erstes Beschleunigungszeitdiagramm mit einer Sensorinitiali- sierung ohne EEPROM-Fehler,

Figur 5    ein weiteres Beschleunigungszeitdiagramm mit einer Sensoriniti- alisierung mit EEPROM-Fehler während der Initialphase,

Figur 6    ein weiteres Beschleunigungszeitdiagramm mit einer Sensoriniti- alisierung mit EEPROM-Fehler während der zyklischen Phase und

Figur 7    eine Alternativlösung mit nicht abgeglichener Spannungsreferenz Sensorinitialisierung mit EEPROM-Fehler währen der zyklischen Phase.

Ein Unfallsensor misst ein physikalische Größe und ermittelt diese an eine zentrale Rechen- bzw. Regelungseinheit. Die Grundgenauigkeit der Sensoren kann dabei durch einen Abgleich auf die geforderte Genauigkeit der einzelnen Parameter gebracht werden. Bei Airbagsystemen werden die zentralen und peripheren Sensoren im Allgemeinen hinsichtlich ihrer Empfindlichkeit abgeglichen, so dass die Toleranz dieses Parameters im geforderten Bereich liegt. Um die Abgleichinformation nicht flüchtig im Sensor zu speichern, kommen auf den integrierten Schaltkreis des Sensors, also dem Logikbaustein, verschiedene Arten von Speicherzellen zur Verwendung, beispielsweise ZAP-Dioden oder EEPROM.

Fällt die Speicherzelle mit den Abgleichinformationen aus, wird dies im Allgemeinen initial oder zyklisch durch entsprechende Überwachungsmechanismen, wie einer Prüfsummenuntersuchung, entdeckt.

Erfindungsgemäß wird in Abhängigkeit von diesem Test ausgewählt, ob erste Daten aus einem wiederbeschreibbaren Speicher oder zweite Daten, die hart verdrahtet in einem zweiten Speicher abgespeichert sind, zur Beeinflussung der Verarbeitung wenigstens einer Messgröße verwendet. Damit kann bei einem Ausfall des Speichers, der wiederbeschreibbar ist, auf Daten aus einem hart verdrahtetem Speicher zurückgegriffen werden, um eine Grundfunktionalität des Sensors weiterhin zu gewährleisten und einen Ausfall des Sensors zu vermeiden.

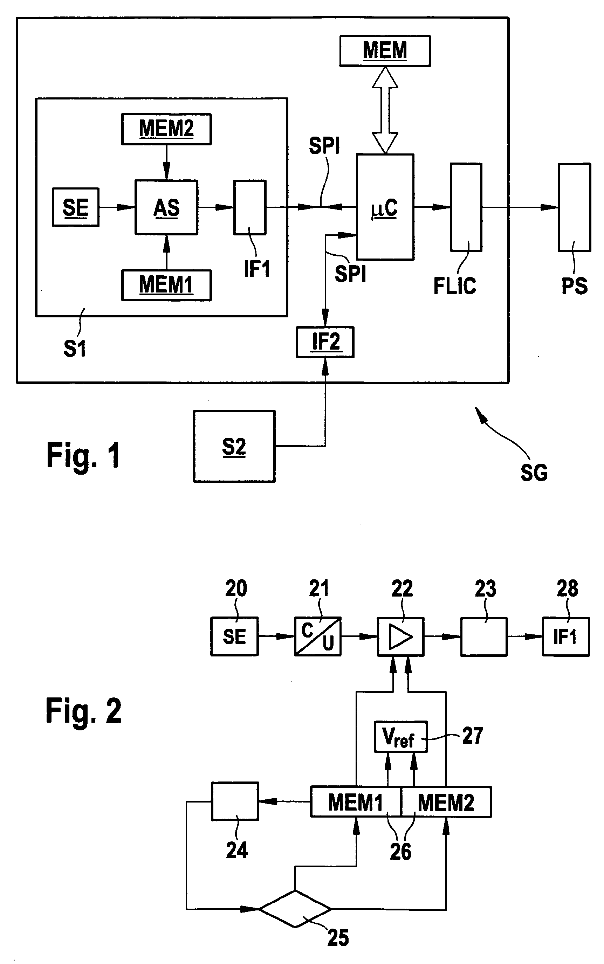

Figur 1 zeigt in einem Blockschaltbild den erfindungsgemäßen Unfallsensor in einem Steuergerät SG zur Ansteuerung von Personenschutzmitteln PS, wie Airbags, Gurtstraffer, Überrollbügel oder Fußgängerschutzmitteln. Ein erfindungsgemäßer Unfallsensor S1 ist im Steuergerät SG angeordnet. Dieser Sensor S1 weist ein Sensorelement SE auf, das mikromechanisch hergestellt wurde und infolge einer Beschleunigung ein kapazitives Signal abgibt, das in eine Spannung umgewandelt und dann verstärkt wird. Dies geschieht im Logikbaustein AS, der mehrere Funktionen ausweist. Insbesondere ist der Logikbaustein AS, an den das Signal des Sensorelements SE angeschlossen ist, mit einem Messverstärker und weiteren Signalverarbeitungsfunktionen ausgestattet. Der Logikbaustein AS führt nun einen Test durch, um den Sensor S1 zu überprüfen. Ergibt sich dabei ein Fehler im Speicher MEM1, dann lädt der Logikbaustein AS für die Verarbeitung des wenigstens einen Messwerts des Sensorelements SE die Daten aus dem fest verdrahteten Speicher MEM2. Zeigt sich jedoch kein Fehler bei der Prüfsummenüberprüfung des Speichers MEM1, der hier als EEPROM ausgebildet ist, dann werden die Daten zur Verarbeitung des Messwerts aus dem Speicher MEM1 geladen, der die genaue Abgleichinformationen beinhaltet und auch Informationen darüber, welche Referenzspannung zu setzen ist. Damit kann dann eine Genauigkeit von 5% des Beschleunigungswerts erreicht werden, während mit der Grundfunktionalität und den Daten aus dem fest verdrahteten Speicher MEM2 nur eine Genauigkeit von 9% möglich ist. Dabei wird im Wesentlichen der Messverstärker beeinflusst. Die Signale, die so verstärkt, gegebenenfalls gefiltert und digitalisiert wurden, werden dann über eine Schnittstelle IF1, die vorliegend als integrierter Baustein ausgeführt wird, aus dem Sensor S1 über eine SPI-Leitung an einen Mikrocontroller μC im Steuergerät SG übertragen. Neben den Sensorwerten werden auch die Informationen darüber übertragen, welche Funktionalität der Sensor S1 im Steuergerät SG aufweist, d. h. liegt eine 5% oder 9%-ige Empfindlichkeit vor. Entsprechend kann der Mikrocontroller μC bei der Einstellung seines Ansteuerungsalgorithmus reagieren. In diesen Algorithmus gehen die Sensorwerte des Sensors S1 ein. Da es sich bei dem Sensor S1 um ein Beschleunigungssensor vorliegend handelt, kann das Sensorelement SE in einer Dimension, beispielsweise in Fahrzeuglängsrichtung, aber auch in anderen Empfindlichkeitsachsen anstatt oder zusätzlich empfindlich sein. Der Mikrocontroller μC kann über den SPI-Bus auch verschiedene Zustände abrufen. Dazu gehört beispielsweise, welche Funktionalität verwendet werden soll und welche Offsetregelung verwendet werden soll. Der Logikbaustein AS weist zwei Offsetregelungen auf. Eine erste Offsetregelung wird in der sogenannten Initialphase oder Powerup-Phase oder Startphase verwendet. Diese schnelle Offsetregelung hat die Aufgabe, den Rohoffset des Sensorelements zu beseitigen. Nach Abschluss der Initialphase folgt die zyklische Phase oder Arbeitsphase des Sensors, indem der Sensor S1 seine Sensorwerte liefern soll. Hier wird eine langsame Offsetregelung verwendet, die lediglich die Aufgabe hat, Drifteffekte, die beim vorliegenden Sensor S1 auftreten können, zu beseitigen. Drifteffekte während der zyklischen Phase sind vor allem durch Temperaturänderung des Systems verursacht. Die langsame Offsetregelung vergleicht im Prinzip jede Sekunde den Ausgangswert des Sensors mit dem Nullzustand. Ist das Ausgangssignal größer 0LSB, dann wir ein 1LSB abgezogen, ist das Ausgangssignal kleiner 1LSB, wird 1LSB dazuaddiert. Die Offsetregelung kann analog oder digital aufgebaut sein.

Der Mikrocontroller μC, der auch durch jeden anderen Prozessortyp oder anwendungsorientierten Schaltkreis ersetzt werden kann, ist über ein Datenein-/ausgang mit einem Speicher MEM verbunden, aus dem der Mikrocontroller μC den Ansteuerungsalgorithmus lädt und den er benutzt, um als Arbeitsspeicher zu dienen. In Abhängigkeit von den Sensorwerten bestimmt der Mikrocontroller μC, ob ein Ansteuerungssignal erzeugt werden soll. Dazu verwendet jedoch der Mikrocontroller μC auch Signale von Sensoren von außerhalb des Steuergeräts SG. Über einen weiteren Schnittstellenbaustein I F2 ist ein externer Sensor S2 angeschlossen. Dabei kann es sich um ein Beschleunigungs-, Körperschall- oder Drucksensor handeln. Dieser Sensor weist als Unfallsensor die Erfindung auf.

Überträgt der Mikrocontroller μC ein Ansteuerungssignal an einen Ansteuerungsschaltkreis FLIC, dann sorgt dieser Ansteuerungsschaltkreis FLIC dafür, dass Personenschutzmittel wie Airbags oder Gurtstraffer oder Überrollbügel angesteuert werden.

Neben den oben genannten Beschleunigungsdruck- oder Körperschallsensoren können natürlich auch Drehratensensoren oder andere Unfallsensoren verwendet werden.

Erfindungsgemäß überprüft nun der Logikbaustein AS mittels eines Tests den Speicher MEM1, der wiederbeschreibbar ausgebildet ist und vorliegend als EEPROM ausgebildet ist. Dafür verwendet der Logikbaustein AS, wie oben dargestellt, ein Prüfsummenverfahren. Stellt der Logikbaustein AS dabei fest, dass ein Fehler im EEPROM vorliegt, dann lädt der Logikbaustein AS die Daten zur Beeinflussung der Auswertung der Messwerte des Sensorelements SE aus dem Speicher MEM2, indem die Daten fest verdrahtet sind. Kommt dieser Effekt während einer Arbeitsphase vor, dann kann dies zu einem Sprung im Signal führen, das als Sensorwert dem Mikrocontroller μC übertragen wird. Dafür kann dann vorgesehen sein, den Mikrocontroller μC auf diesen Effekt aufmerksam zu machen, so dass dieser Sprung nicht zu einer Ansteuerung der Personenschutzmittel führt.

Bei einem Fehler im EEPROM während der Arbeitsphase (der Übergang Initialphase zu Arbeitsphase ist durch das EOP-Kommando "End of programming" gegeben, welches an alle SPI-Teilnehmer im Airbag-System gesendet wird) ist das in der SPI-Datenübertragung der Sensordaten mitgesendet NRO-bit (Non Regular Operation) = 0, bei einer Abweichung ist das NRO-bit =1, was einen Fehler anzeigt und als Systemreaktion werden die Daten nicht ausgewertet/verworfen. Zusätzlich trägt sich, falls der Fehler länger angezeigt wird, nach einer gewissen Zeit (Fehlerqualifizierungszeit für NRO-Fehler aktuell 1sec) ein Fehler in den Fehlerspeicher des Steuergerätes ein.

Figur 2 erläutert in einem Signalablaufdiagramm ein Beispiel für die erfindungsgemäße Ausgestaltung. Das Sensorelement 20 ist an einen Kapazitätsspannungswandler 21 angeschlossen, der die Kapazitätsänderung, die infolge einer Beschleunigung auftritt, in eine Spannung umwandelt. Diese Spannung wird dann in einem Verstärker 22 verstärkt. Filtermittel können vor oder nach dem Verstärker 22 vorgesehen sein. Dieser Verstärker 22 wird in Abhängigkeit von Daten entweder aus dem Speicher MEM1 oder MEM2 beeinflusst. Dies ist im Block 26 angedeutet. Nach dem Verstärker 22 folgt die Offsetregelung 23, die in der Initialphase wie oben dargestellt eine schnelle Offsetregelung ist und in der zyklischen Phase eine langsame Offsetregelung. Nach der Offsetregelung werde im Block 28 diese Daten dann über die Schnittstelle IF1 zum Mikrocontroller µC übertragen. Gleichzeitig läuft jedoch im Sensor S1 der oben genannte Test im Block 24 mittels der Prüfsummen. In Block 25 wird das Testergebnis ausgewertet. In Abhängigkeit von diesem Testergebnis wird dann der Speicherblock 26 angesteuert, so dass in Abhängigkeit von diesem Text die entsprechenden Daten aus dem Speicher MEM1 oder MEM2 geladen werden, um den Verstärker 22 derart zu beeinflussen, dass entweder bei einer fehlerfreien Funktion die Daten aus dem Speicher MEM1 geladen werden, um vorliegend eine Genauigkeit von 5% zu erreichen oder bei einem Fehler die Daten aus dem Speicher MEM2 geladen werden und die Grundfunktionalität von einer Genauigkeit von 9% zu erreichen. Zusätzlich wird in Abhängigkeit vom Testsignal die Referenzspannung 27 festgelegt.

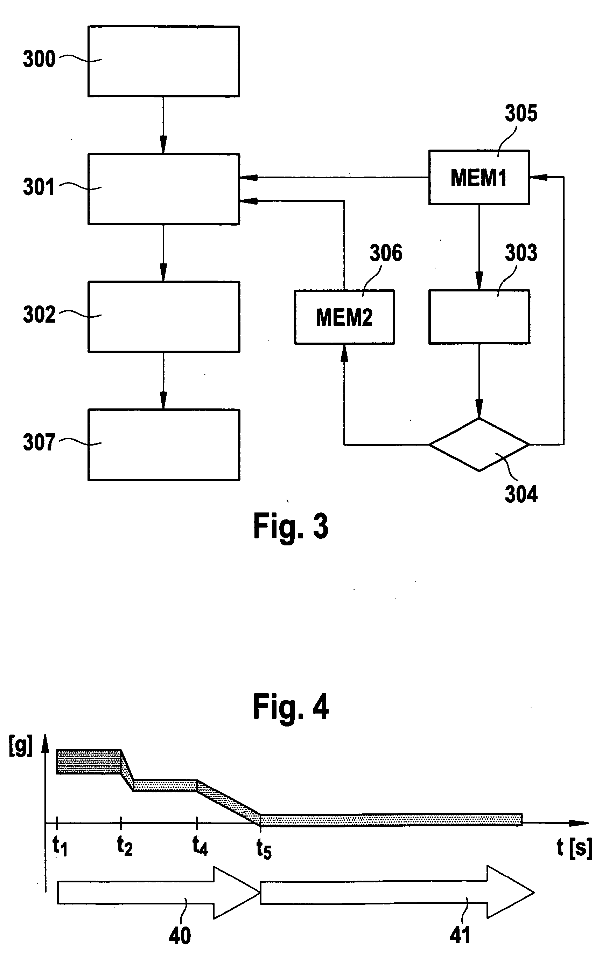

Figur 3 erläutert in einem Flussdiagramm das erfindungsgemäße Verfahren. In Verfahrensschritt 300 wird der Messwert mittels des Sensorelements SE erfasst. Dieser Messwert wird in Verfahrensschritt 301, wie oben dargestellt, in eine Spannung umgewandelt, die dann verstärkt wird. Diese Spannung wird entweder mittels Daten aus dem Speicher M1 oder M2 festgelegt. Dies bestimmt dann die Genauigkeit des Wertes. In Verfahrensschritt 302 erfolgt die schnelle Offsetregelung in der Initialphase oder in der zyklischen Phase die langsame Offsetregelung. In Verfahrensschritt 303 erfolgt der Test des Speichers MEM1, also des wiederbeschreibbaren Speichers mittels der Prüfsumme. Anstatt eines Prüfsummentests können auch andere Testverfahren, die hier geeignet sind, verwendet werden. In Verfahrensschritt 304 wird überprüft, ob der Test erfolgreich war oder nicht. War der Test erfolgreich, werden die Daten in Verfahrensschritt 305 aus dem Speicher MEM1 geladen, um die Verstärkung für die Messwerte entsprechend einzustellen. Auch die Referenzspannung wird entsprechend eingestellt.

Die Referenzspannung dient für die komplette Schaltung. War der Test nicht erfolgreich, dann erfolgt in Verfahrensschritt 306 ein Laden der Daten zur Beeinflussung der Verstärker und der Referenzspannung aus dem fest verdrahteten Speicher MEM2. Nach der Offsetregelung 302 erfolgt die Übertragung der Messwerte in Verfahrensschritt 307, wobei daneben auch Statussignale, wie ein Ergebnis des Tests mit übertragen werden.

Figur 4 zeigt ein erstes Beschleunigungszeitdiagramm des Beschleunigungssensors S1. Vorliegend handelt es sich um den Signalverlauf, ohne einen Fehler in Speicher MEM1. In der Initialphase 40 erfolgt zum Zeitpunkt t1 das Einschalten der Energie und damit die Aktivierung des Sensors S1. Bis zur Zeit t2 liegt damit ein bestimmter Offset, d. h. ein Signal vor mir einer Genauigkeit von ± 9%, die hier dem Sensorelement eigen ist. Zum Zeitpunkt t2 werden Abgleichdaten aus dem Speicher MEM1, also dem EEPROM gelesen. Im Folgenden zwischen t2 und t4 erfolgt ein Test dieses Speichers MEM1. Durch die Abgleichdaten erfolgt ein Sprung im Signal, und zwar ein negativer Sprung, sowie eine erhöhte Genauigkeit von ± 5%, was durch die nun graue Farbe angedeutet ist. Zum Zeitpunkt T4 wird die schnelle Offsetregelung aktiviert, die dazu führt, dass das Ausgangssignal auf 0 ausgeregelt wird. Zum Zeitpunkt t5 ist diese Initialphase abgesch!ossen und die schnelle Offsetregelung wird ausgeschaltet. Ab t5 erfolgt dann die langsame Offsetregelung, um Drifteffekte zu eliminieren. Die zyklische Phase ist hier mit dem Bezugszeichen 41 gekennzeichnet.

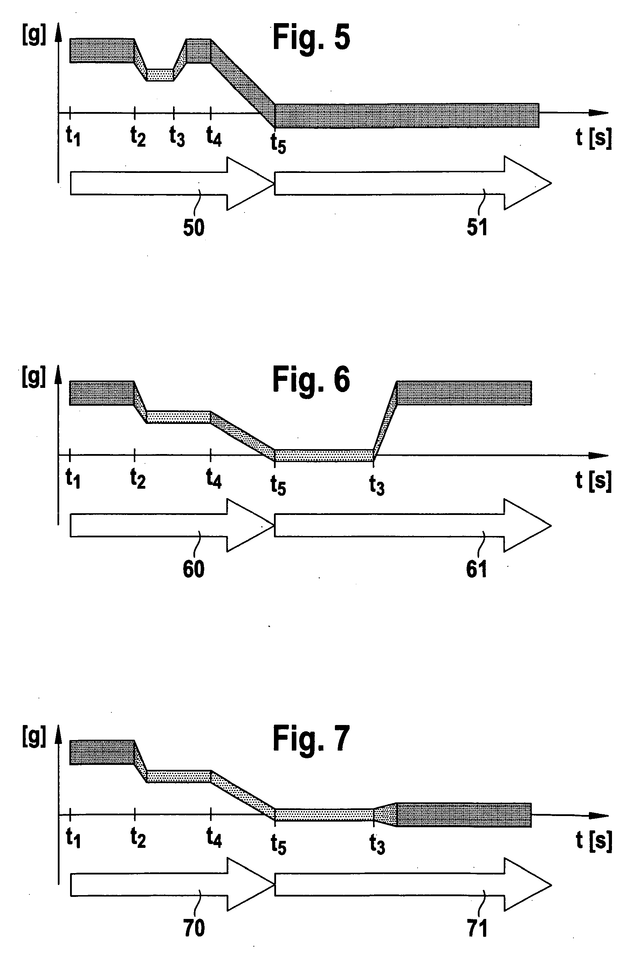

Figur 5 zeigt nun eine Sensorinitialisierung mit einem Fehler im Speicher MEM1 während der Initialphase. Gleiche Zeiten werden hier mit gleichen Bezeichnungen, wie in Figur 4, bezeichnet. Wiederum wird zum Zeitpunkt t1 die Leistung eingeschaltet und zum Zeitpunkt t2 erfolgt das Laden der Abgleichdaten aus dem Speicher MEM1. Damit erfolgt dann wieder ein Sprung im Signal und eine erhöhte Empfindlichkeit. Zum Zeitpunkt t3 wird jedoch des durchgeführten Tests ein Fehler im Speicher MEM1 festgestellt. Dies wird dann zu einem Sprung in der Genauigkeit und des Signals, da nunmehr die Abgleichdaten aus dem Speicher MEM2 geladen werden. Es erfolgt also ein Zurückkehren auf die Grundfunktionalität des Sensors S1. Zum Zeitpunkt t4 wird wieder die schnelle Offsetregelung aktiviert, die zu einer Ausregelung des Signals folgt, wobei nun die Genauigkeit von ± 9% auch in der zyklischen Phase 51 beibehalten wird.

Figur 6 zeigt eine Sensorinitialisierung mit dem Fehler im Speicher MEM1 während der zyklischen Phase 61. In der Initialphase 60 erfolgt wie in Figur 4 die gleiche Funktion bis zum Zeitpunkt t5. Nun wird jedoch in der zyklischen Phase 61 zum Zeitpunkt t3 erneut ein Fehler erkannt. Daher erfolgt dann durch das Laden der Daten für die Grundfunktionalität wieder ein Sprung im Signal und eine Empfindlichkeitsverschlechterung wiederum auf ± 9%. Dies muss dem Mikrocontroller µC mitgeteilt werden, so dass dieser die veränderten Signale bei seinem Ansteuerungsalgorithmus berücksichtigt.

Figur 7 zeigt letztlich das gleiche Verhalten wie in Figur 6, außer dass nun eine nicht abgeglichene Spannungsreferenz verwendet wird, die eine höhere Genauigkeit aufgrund von technologischen Verbesserungen aufweist. Damit kommt es dann nicht zu einem Pegelversatz, sondern nur zu einer Empfindlichkeitsverschlechterung auf ± 9%. Hier ist die Initialphase mit dem Bezugzeichen 70 und die zyklische Phase mit dem Bezugzeichen 71 gekennzeichnet.

Die Genauigkeiten von 5 und 9% sind vorliegend rein beispielhaft angegeben; es können je nach Sensorik auch andere Genauigkeiten verwendet werden.

**Patentansprüche**

1. Unfallsensor (S1) mit

   - einem Sensorelement (SE) zur Erfassung wenigstens einer Messgröße und
   - einem Logikbaustein (AS),
   **gekennzeichnet,**
   - **durch** einen ersten Speicher (MEM1), der wiederbeschreibbar ausgebildet ist und in dem erste Daten aus der Herstellung und/oder aus Adaptionen aus dem Betrieb des Unfallsensors (S1) zur Beeinflussung einer Verarbeitung der wenigstens einen Messgröße gespeichert sind und
   - **durch** einen zweiten Speicher (MEM2), in dem zweite Daten zur Beeinflussung der Verarbeitung fest verdrahtet gespeichert sind, um die Grundfunktionalität des Unfallsensors (S1) zu gewährleisten und
   - **dadurch**, dass der Logikbaustein (AS) in Abhängigkeit von einem Test des ersten Speichers (MEM1) die ersten oder die zweiten Daten zur Verarbeitung der wenigstens einen Messgröße lädt.

2. Unfallsensor nach Anspruch 1, **dadurch gekennzeichnet, dass** der Logikbaustein (AS) derart konfiguriert ist, dass der Test mittels einer Prüfsumme durchgeführt wird.

3. Unfallsensor nach Anspruch 1 oder 2, **dadurch gekennzeichnet, dass** die Logikschaltung AS in Abhängigkeit von den ersten oder den zweiten Daten eine Verstärkung für die wenigstens eine Messgröße und wenigstens einer Referenzspannung beeinflusst.

4. Unfallsensor nach einem der vorhergehenden Ansprüche, **dadurch gekennzeichnet, dass** der Unfallsensor (S1) eine schnelle Offsetregelung zur Beseitigung eines Offsets des Sensorelements (SE) und eine langsame Offsetregelung für die Beseitigung einer Drift aufweist, wobei der Logikbaustein (AS) derart konfiguriert ist, dass der Logikbaustein (AS) die schnelle Offsetregelung in einer Initialphase (40, 50, 60, 70) und die langsame Offsetregelung in einer zyklischen Phase (41, 51, 61, 71) einsetzt.

5. Unfallsensor nach einem der vorhergehenden Ansprüche, **dadurch gekennzeichnet, dass** der Unfallsensor (S1) eine Schnittstelle (IF1) aufweist, über die der Unfallsensor (S1) ein Ergebnis des Test versendet.

6. Verfahren zum Verarbeiten wenigstens einer Messgröße eines Unfallsensors (S1) mit Verfahrensschritten

   - Erfassen der wenigstens einen Messgröße;
   **gekennzeichnet durch** die Verfahrensschritte
   - Testen eines ersten Speichers (MEM1), der wiederbeschreibbar ausgebildet ist;
   - Laden von ersten oder zweiten Daten in Abhängigkeit von dem Test, wobei die ersten Daten im ersten Speicher (MEM1) und die zweiten Daten fest verdrahtet in einem zweiten Speicher (MEM2) abgespeichert sind;
   - Beeinflussen der Verarbeitung **durch** die ersten Daten aus der Herstellung und/oder aus Adaptionen aus dem Betrieb des Unfallsensors (S1) oder die zweiten Daten, um die Grundfunktionalität des Unfallsensors (S1) zu gewährleisten.

7. Verfahren nach Anspruch 6, **dadurch gekennzeichnet, dass** der Test mittels einer Prüfsumme durchgeführt wird.

8. Verfahren nach Anspruch 6 oder 7, dass in Abhängigkeit von der ersten oder den zweiten Daten eine Verstärkung für die wenigstens einen Messgröße und wenigstens eine Referenzspannung beeinflusst wird.

9. Verfahren nach einem der Ansprüche 6 bis 8, **dadurch gekennzeichnet, dass** ein Versenden des verarbeiteten wenigstens einen Messwerts für eine vorgegebene Zeit dann unterdrückt wird, wenn in einer zyklischen Phase der Test einen Fehler anzeigt.

10. Verfahren nach einem der Ansprüche 6 bis 9, **dadurch gekennzeichnet, dass** in einer Initialphase (40, 50, 60, 70) eine schnelle Offsetregelung zur Beseitigung eines Offsets eines Sensorelements (SE) und in einer zyklischen Phase eine langsame Offsetregelung zur Beseitigung einer Drift eingesetzt werden.

**Claims**

1. Accident sensor (S1) having

   - a sensor element (SE) for detecting at least one measurement variable, and
- a logic module (AS),
**characterized**
- **by** a first memory (MEM1) which is rewritable and stores first data from the production of the accident sensor (S1) and/or from adaptations from the operation of the accident sensor (S1) for influencing processing of the at least one measurement variable, and
- by a second memory (MEM2) which stores second data for influencing the processing in a hard-wired manner in order to ensure the basic functionality of the accident sensor (S1), and
- in that the logic module (AS) loads the first or second data for processing the at least one measurement variable on the basis of a test of the first memory (MEM1).

2. Accident sensor according to Claim 1, **characterized in that** the logic module (AS) is configured in such a manner that the test is carried out using a checksum.

3. Accident sensor according to Claim 1 or 2, **characterized in that** the logic circuit (AS) influences a gain for the at least one measurement variable and at least one reference voltage on the basis of the first or second data.

4. Accident sensor according to one of the preceding claims, **characterized in that** the accident sensor (S1) has fast offset control for eliminating an offset of the sensor element (SE) and has slow offset control for eliminating a drift, the logic module (AS) being configured in such a manner that the logic module (AS) uses the fast offset control in an initial phase (40, 50, 60, 70) and uses the slow offset control in a cyclical phase (41, 51, 61, 71).

5. Accident sensor according to one of the preceding claims, **characterized in that** the accident sensor (S1) has an interface (IF1) via which the accident sensor (S1) sends a test result.

6. Method for processing at least one measurement variable of an accident sensor (S1), having the method step of

- detecting the at least one measurement variable;
**characterized by** the method steps of
- testing a first memory (MEM1) which is rewritable;
- loading first or second data on the basis of the test, the first data being stored in the first memory (MEM1) and the second data being stored in a second memory (MEM2) in a hard-wired manner;

- influencing the processing by means of the first data from the production of the accident sensor (S1) and/or from adaptations from the operation of the accident sensor (S1) or by means of the second data in order to ensure the basic functionality of the accident sensor (S1).

7. Method according to Claim 6, **characterized in that** the test is carried out using a checksum.

8. Method according to Claim 6 or 7, **characterized in that** a gain for the at least one measurement variable and at least one reference voltage are influenced on the basis of the first or second data.

9. Method according to one of Claims 6 to 8, **characterized in that** sending of the processed at least one measured value is suppressed for a predefined time when the test indicates an error in a cyclical phase.

10. Method according to one of Claims 6 to 9, **characterized in that** fast offset control for eliminating an offset of a sensor element (SE) is used in an initial phase (40, 50, 60, 70) and slow offset control for eliminating a drift is used in a cyclical phase.

## Revendications

1. Détecteur d'accident (S1) comprenant

- un élément de détection (SE) pour détecter au moins une grandeur de mesure et
- un composant logique (AS),
**caractérisé**
- **par** une première mémoire (MEM1), laquelle est configurée pour être réinscriptible et dans laquelle sont enregistrées des premières données issues de la fabrication et/ou d'adaptations du fonctionnement du détecteur d'accident (S1) en vue d'influencer un traitement de l'au moins une grandeur de mesure et
- par une deuxième mémoire (MEM2), dans laquelle sont enregistrées physiquement à demeure des deuxièmes données en vue d'influencer le traitement, afin de garantir la fonctionnalité de base du détecteur d'accident (S1) et
- en ce que le composant logique (AS) charge les premières ou les deuxièmes données en vue de traiter l'au moins une grandeur de mesure en fonction d'un test de la première mémoire (MEM1).

2. Détecteur d'accident selon la revendication 1, **caractérisé en ce que** le composant logique (AS) est configuré de telle sorte que le test soit effectué au moyen d'un total de contrôle.

**3.** Détecteur d'accident selon la revendication 1 ou 2, **caractérisé en ce que** le circuit logique (AS) influence une amplification pour l'au moins une grandeur de mesure et au moins une tension de référence en fonction des premières ou des deuxièmes données.

**4.** Détecteur d'accident selon l'une des revendications précédentes, **caractérisé en ce que** le détecteur d'accident (S1) présente une régulation de décalage rapide pour éliminer un décalage de l'élément de détection (SE) et une régulation de décalage lente pour éliminer une dérive, le composant logique (AS) étant configuré de telle sorte que le composant logique (AS) applique la régulation de décalage rapide dans une phase initiale (40, 50, 60, 70) et la régulation de décalage lente dans une phase cyclique (41, 51, 61, 71).

**5.** Détecteur d'accident selon l'une des revendications précédentes, **caractérisé en ce que** le détecteur d'accident (S1) présente une interface (IF1) par le biais de laquelle le détecteur d'accident (S1) envoie un résultat du test.

**6.** Procédé de traitement d'au moins une grandeur de mesure d'un détecteur d'accident (S1) comprenant les étapes suivantes :

- détection de l'au moins une grandeur de mesure ; **caractérisé par** les étapes suivantes :
- test d'une première mémoire (MEM1), laquelle est configurée pour être réinscriptible ;
- chargement de premières ou de deuxièmes données en fonction du test, les premières données étant enregistrées dans la première mémoire (MEM1) et les deuxièmes données étant enregistrées physiquement à demeure dans une deuxième mémoire (MEM2) ;
- influence du traitement par les premières données issues de la fabrication et/ou d'adaptations du fonctionnement du détecteur d'accident (S1) ou les deuxièmes données, afin de garantir la fonctionnalité de base du détecteur d'accident (S1).

**7.** Procédé selon la revendication 6, **caractérisé en ce que** le test est réalisé au moyen d'un total de contrôle.

**8.** Procédé selon la revendication 6 ou 7, **caractérisé en ce qu'**une amplification pour l'au moins une grandeur de mesure et au moins une tension de référence est influencée en fonction des premières ou des deuxièmes données.

**9.** Procédé selon l'une des revendications 6 à 8, **caractérisé en ce qu'**une émission de l'au moins une grandeur de mesure traitée est inhibée pendant une durée prédéfinie lorsque le test révèle une erreur dans une phase cyclique.

**10.** Procédé selon l'une des revendications 6 à 9, **caractérisé en ce qu'**une régulation de décalage rapide en vue d'éliminer un décalage d'un élément de détection (SE) est appliquée dans une phase initiale (40, 50, 60, 70) et une régulation de décalage lente en vue d'éliminer une dérive dans une phase cyclique.

**Fig. 1**

**Fig. 2**

**Fig. 3**

**Fig. 4**

Fig. 5

Fig. 6

Fig. 7

**IN DER BESCHREIBUNG AUFGEFÜHRTE DOKUMENTE**

**In der Beschreibung aufgeführte Patentdokumente**

- DE 10237162 A1